Europäisches Patentamt

European Patent Office

Office européen des brevets

(19)

(11) Veröffentlichungsnummer: **0 046 322**
**A1**

(12) **EUROPÄISCHE PATENTANMELDUNG**

(21) Anmeldenummer: **81200899.3**

(22) Anmeldetag: **11.08.81**

(51) Int. Cl.³: **H 02 M 7/17**

(30) Priorität: **15.08.80 CH 6168/80**

(43) Veröffentlichungstag der Anmeldung: **24.02.82**
**Patentblatt 82/8**

(84) Benannte Vertragsstaaten: **CH DE FR LI**

(71) Anmelder: **BBC Aktiengesellschaft Brown, Boveri & Cie.,
CH-5401 Baden (CH)**

(72) Erfinder: **Spatny, Walter, Hofacherstrasse 6,
CH-5417 Untersiggenthal (CH)**

(54) **Elektrische Speiseeinrichtung.**

(57) Die Speiseeinrichtung für mehrere Verbraucher, insbesondere Hochspannungs-Gleichstromverbraucher wie Elektrofilter, umfasst den einzelnen Verbrauchern ($F_1$, $F_2$, $F_3$) zugeordnete, vorzugsweise zweipulsige Teilstromrichter ($TS_1$, $TS_2$, $TS_3$) die an je zwei Phasen eines dreiphasigen Netzes (R S T) angeschlossen sind, während der Gegenpol Verbraucherspeisung durch einen gemeinsamen, ungesteuerten Teilstromrichter ($TS_9$) gebildet ist. Letzterer wird dreipulsig ausgeführt und an alle Phasen angeschlossen. Die Verbraucher-zugeordneten Teilstromrichter werden gesteuert ausgeführt und erlauben trotz vermindertem Aufwand individuelle Spannungseinstellung.

BBC Aktiengesellschaft Brown, Boveri & Cie., Baden/Schweiz
================================================================

Elektrische Speiseeinrichtung
─────────────────────────────

Die Erfindung bezieht sich auf eine elektrische Speiseeinrichtung für eine Mehrzahl von Verbrauchern, insbesondere
für **Hochspannungs-Gleichstromverbraucher** wie Elektrofilteranlagen, nach dem Oberbegriff des Patentanspruchs 1, sowie
auf zugehörige Betriebsverfahren.

Speiseeinrichtungen der vorgenannten Art sind für Elektrofilteranlagen mit einer Mehrzahl von für sich mit steuerbarer
Hochspannung zu versorgenden Filtern allgemein bekannt. Dabei
ist für jeden Filter beispielsweise ein Thyristorstellglied
zur Wechselspannungssteuerung mit nachgeordnetem Transformator und anschliessendem Gleichrichter vorgesehen. Im Hinblick auf die derzeit verfügbaren Halbleiterelemente für die
Wechselspannungssteuerung wird dabei im allgemeinen mit vergleichsweise niedriger Primärspannung dieses dem einzelnen
Verbraucher zugeordneten Transformators gearbeitet, weshalb
meist eine vorgängige Herabtransformation der Netzwechselspannung von z.B. 6,6 kV auf 380 V erforderlich ist. Im Verbrauchertransformator erfolgt dann die Heraufsetzung auf die
für Filterzwecke erforderliche Hochspannung von z.B. 60 kV.

Nachteilig bei der bekannten Ausführung ist der hohe Aufwand
für das Thyristorstellglied mit zusätzlichem Gleichrichter
sowie für die doppelte Transformation. Hierdurch ergeben sich
auch zusätzliche Leistungsverluste. Auch ist die Leistungsverteilung auf einem niedrigen Spannungsniveau mit hohen Strömen und entsprechendem Aufwand für die Schalter verbunden.
Diese Nachteile machen sich vor allem für Grossanlagen bemerkbar, wie sie in Kraftwerken zum Einsatz kommen und eine
grosse Zahl von einzelnen Filtern aufweisen.

Aufgabe der Erfindung ist daher die Schaffung einer Speiseeinrichtung, die sich durch verminderten Bauaufwand und ebensolche Verluste bei individueller Einstell- oder Steuerbarkeit
der Verbraucherspannung auszeichnet. Die erfindungsgemässe Lösung dieser Aufgabe kennzeichnet sich bei einer Speiseeinrichtung der eingangs erwähnten Art durch die Merkmale des Patentanspruchs 1. Die danach vorgesehene, unmittelbare Speisung der
einzelnen Verbraucher durch zugeordnete, steuerbare Teilstromrichter erspart den üblichen Mehrfachaufwand an Halbleiterschaltungen für Stellglied und Gleichrichter unbeschadet einer individuellen Steuerbarkeit. Die Zusammenfassung der übrigen Teilstromrichter zu einem gemeinsamen Pol für alle Verbraucher ergibt dabei nochmals eine Verminderung des Halbleiter-Schaltungsaufwandes, wobei hier auf eine Steuerung verzichtet werden kann.

Weitere Merkmale und Vorteile der Erfindung werden anhand des in den Zeichnungen veranschaulichten Ausführungsbeispiels erläutert. Hierin zeigt:

Fig.1 das Prinzipschaltbild einer erfindungsgemässen Mehrfach-Speiseeinrichtung für Elektrofilter und

Fig.2 ein mehrphasiges Spannungs-Zeitdiagramm zur Erläuterung eines besonderen Betriebsverfahrens der Schaltung nach Fig.1.

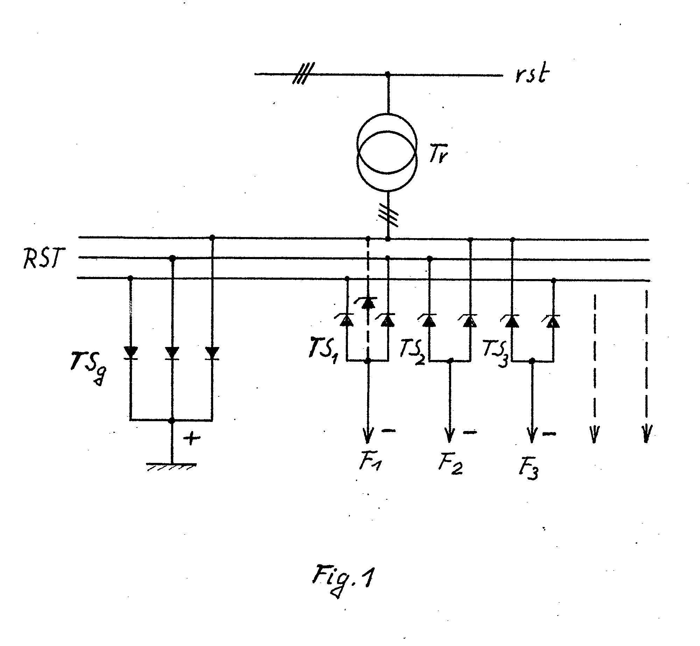

Die Schaltung nach Fig.1 geht aus von einer dreiphasigen Wechselstromquelle R S T z.B. einem Drehstromnetz von 6,6 kV, mit einem gemeinsamen Hochspannungstransformator Tr, über den eine ebenfalls dreiphasige Hochspannungs-Verteilerleitung R S T mit z.B. 60 kV gespeist wird. An jeweils zwei Phasen dieser Leitung sind Teilstromrichter $TS_1$, $TS_2$, $TS_3$ in Form von thyristorbestückten, steuerbaren Halbbrücken angeschlossen. Diese zweipulsigen Teilstromrichter sind den einzelnen Filtern $F_1$, $F_2$, $F_3$ als Verbrauchern zugeordnet und erlauben die individuelle Einstellung der Versorgungs-Hochspannung. Im Gegensatz zu diesen individuellen "Minus"-Polen in Form der Ausgänge der Teilstromrichter $TS_1$, $TS_2$, $TS_3$ wird ein gemeinsamer "Plus"-Pol durch den Ausgang eines weiteren, für alle Verbraucher gemeinsamen Teilstromrichters $TS_g$ gebildet, der dreipulsig ausgeführt und an alle drei Phasen der Leitung R S T angeschlossen ist. Dieser gemeinsame Teilstromrichter kann vorteilhaft ungesteuert ausgeführt werden.

Wie in Fig.1 für den Teilstromrichter TS$_1$ strichliert angedeutet, kann gegebenenfalls auch für einen der verbraucher-
zugeordneten Teilstromrichter oder auch für mehrere oder alle
derselben eine dreipulsige Schaltung in Form einer entsprechenden, gesteuerten Halbbrücke angewendet werden. Die Vorteile der Einsparung an Halbleiterelementen infolge der Zusammenfassung der übrigen Teilstromrichter in einer gemeinsamen Schaltung bleiben hier grundsätzlich erhalten. Andererseits ergibt sich eine höhere Gleichspannungsausbeute und
damit eine bessere Ausnutzung der Halbleiterschaltung und
des Transformators. Gemäss einer besonderen Ausführung des
entsprechenden, zum Erfindungsgegenstand gehörenden Arbeitsverfahrens wird bei einem solchen dreipulsigen Teilstromrichter zweckmässig ein minimaler Zündwinkel von 30$^o$ elektrisch
eingestellt, um einen einwandfreien Betrieb der Stromrichterschaltung zu gewährleisten.

Im übrigen kann die Spannungseinstellung für die einzelnen
Verbraucher in vorteilhaft einfacher Weise durch gemeinsame
zeitliche Verschiebung der jeweils einem Verbraucher zugeordneten Ventil-Zündimpulse gegenüber der Speisewechselspannung
erreicht werden. Gemäss einer Weiterbildung der Erfindung
kommt jedoch mit dem Vorteil einer gegebenenfalls erhöhten
Gleichspannungsausbeute eine unabhängige Verschiebung der
Zündimpulse einzelner Ventilzweige je eines Verbraucher-zugeordneten Teilstromrichters in Betracht.

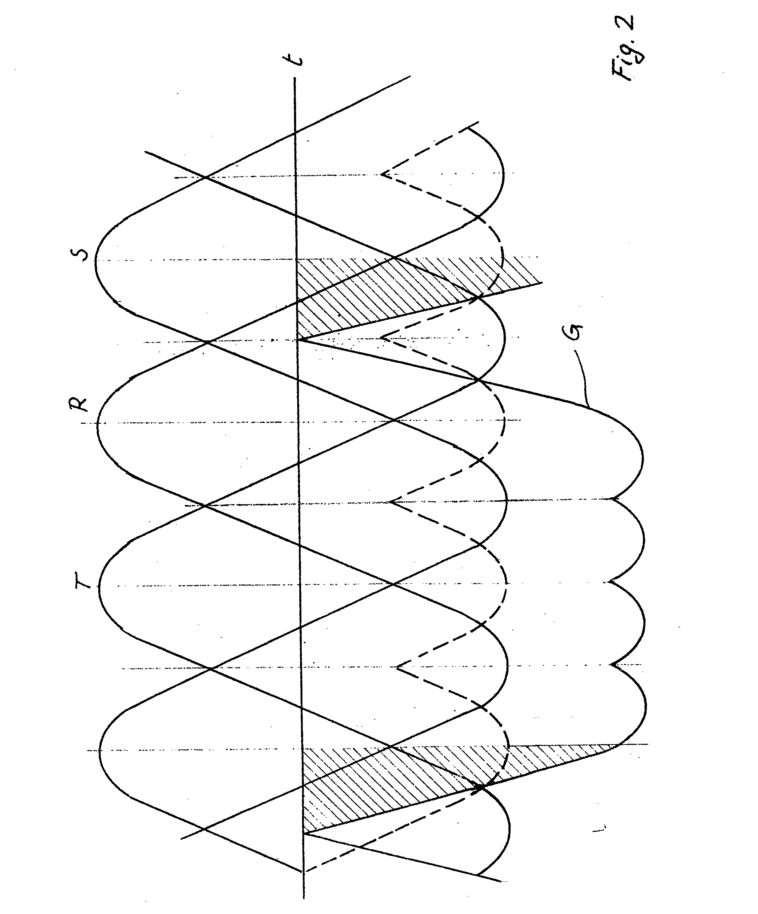

Ein solches Betriebsverfahren ist in dem Spannungs-Zeitdiagramm nach Fig.2 angedeutet. Es sind hier die drei Speisespannungsphasen R, S und T sowie die Gleichspannung G für einen an zwei Phasen angeschlossenen Zweipuls-Teilstromrichter in Verbindung mit einem ungesteuerten Dioden-Dreiphasen-Sterngleichrichter als gemeinsamem Teilstromrichter gemäss Fig.1 angedeutet. Bei einer Vorverlegung des Zündimpulses z.B. im Zweig R- um 60° elektrisch in bezug auf eine Zündung im natürlichen Zündzeitpunkt lässt sich der schraffierte Teil der Spannungszeitfläche von G zusätzlich gewinnen.

- 6 -

P a t e n t a n s p r ü c h e

1. Elektrische Speiseeinrichtung für eine Mehrzahl von Verbrauchern, insbesondere für Hochspannungs-Gleichstromverbraucher wie Elektrofilteranlagen, mit einer an eine Wechselstromquelle angeschlossenen, steuerbaren Stromrichterschaltung, dadurch gekennzeichnet, dass die Stromrichterschaltung (SR) eine Mehrzahl von je gesonderten Verbrauchern ($F_1$, $F_2$ ...) zugeordneten, steuerbaren Teilstromrichtern ($TS_1$, $TS_2$ ...) aufweist, die jeweils einen Pol (-) der Verbraucherspeisung bilden, und dass der zweite Pol (+) der Verbraucherspeisung durch einen für eine Mehrzahl von Verbrauchern gemeinsamen Teilstromrichter ($TS_g$) gebildet ist.

2. Speiseeinrichtung nach Anspruch 1, dadurch gekennzeichnet, dass bei einer dreiphasigen Wechselstromquelle (RST) die den Verbrauchern zugeordneten Teilstromrichter ($TS_1$, $TS_2$ ...) zweipulsig ausgebildet und jeweils an zwei Wechselstromphasen (RS, ST, TR) angeschlossen sind und dass der gemeinsame Teilstromrichter ($TS_g$) ungesteuert dreipulsig ausgebildet und an alle Phasen der Wechselstromquelle (RST) angeschlossen ist.

3. Speiseeinrichtung nach Anspruch 2, dadurch gekennzeichnet,

72/80

0046322

dass wenigstens einer der den Verbrauchern zugeordneten Teilstromrichter ($TS_1$) ebenfalls dreipulsig ausgebildet und an alle Phasen der Wechselstromquelle (RST) angeschlossen ist.

4. Verfahren zum Betrieb einer elektrischen Speiseeinrichtung nach Anspruch 1, dadurch gekennzeichnet, dass die Zündimpulse der gesonderten Verbrauchern zugeordneten Teilstromrichter ($TS_1$, $TS_2$ ...) zur Speisespannungssteuerung jeweils für einen Teilstromrichter zeitlich in unveränderter gegenseitiger Relativlage verschoben werden.

5. Verfahren zum Betrieb einer elektrischen Speiseeinrichtung nach Anspruch 1, dadurch gekennzeichnet, dass die Zündimpulse der gesonderten Verbrauchern zugeordneten Teilstromrichter ($TS_1$, $TS_2$ ...) zur Speisespannungssteuerung jeweils für einen Teilstromrichter relativ zueinander bzw. voneinander unabhängig zeitlich verschoben werden.

6. Verfahren zum Betrieb einer elektrischen Speiseeinrichtung nach Anspruch 1, dadurch gekennzeichnet, dass bei Verwendung mindestens eines dreipulsigen, einem Verbraucher zugeordneten Teilstromrichters ein minimaler Zündwinkel von $30^0$ elektrisch eingestellt wird.

Fig.1

Fig. 2

T R S

G

t

- 2/2 -

0046322

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 3 354 375 (POPPINGER) <br><br> * Spalte 4, Zeile 54 bis Spalte 11, Zeile 11 * <br><br> & DE - A - 1 488 033 <br> & CH - A - 415 818 <br><br> -- | 1,2 | H 02 M 7/17 |
| | ELECTRONIQUE INDUSTRIELLE, Nr. 88, November 1965 PARIS (FR) "Ultilisation du thyristor dans l'alimentation de charges inductives", Seiten 465 bis 466. <br><br> * ganzes Dokument * <br><br> -- | 1,5 | |
| | DE - A - 1 538 121 (SIEMENS) <br><br> * Seite 3 * <br><br> ----- | 1 | **RECHERCHIERTE SACHGEBIETE** (Int. Cl.³) <br><br> H 02 M 7/17 <br> B 03 C 3/66 <br> 3/68 <br> H 02 M 7/155 <br> H 02 M 7/19 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23.11.1981 | BERTIN |

EPA form 1503.1 06.78